# EUROPEAN PATENT SPECIFICATION

(11) **EP 3 687 766 B1**
(45) Date of publication and mention of the grant of the patent: **08.11.2023**
(21) Application number: 18786571.2
(22) Date of filing: 26.09.2018
(51) Int. Cl.: B29C 64/153, B29C 64/321, B29C 64/357, B22F 10/28, B22F 10/73, B22F 12/52, B22F 12/67, B33Y 30/00, B22F 10/32, B22F 3/00

(54) **HIGH CAPACITY APPARATUS FOR LAYERED MANUFACTURING FROM POWDERED MATERIALS**
HOCHLEISTUNGSVORRICHTUNG ZUR SCHICHTWEISEN HERSTELLUNG AUS PULVERFÖRMIGEN MATERIALIEN
APPAREIL HAUTE CAPACITÉ POUR LA FABRICATION DE STRATIFIÉS À PARTIR DE MATÉRIAUX EN POUDRE

(30) Priority: 28.09.2017 US 201762564492 P
(43) Date of publication of application: 05.08.2020
(73) Proprietor: 3D Systems, Inc., Rock Hill, SC 29730 (US)
(72) Inventor: VAN VAERENBERGH, Jonas, 9100 Nieuwkerken-Waas (BE); VALKENBORGS, Brawley, 3010 Kessel-lo (BE); CUYT, Luc, 2890 Sint-Amands (BE); SCHILLEBEECKX, Filips, 3360 Korbeek-Lo (BE); VERHEYEN, Jos, 2640 Mortsel (BE)
(74) Representative: dompatent von Kreisler Selting Werner - Partnerschaft von Patent- und Rechtsanwälten mbB
(86) International application number: PCT/US2018/052860
(87) International publication number: WO 2019/067545

(56) References cited:
- EP-A1- 1 759 791
- WO-A1-2016/050311
- WO-A1-2017/088897
- WO-A2-2015/025171
- US-A1- 2002 090 410
- US-B2- 9 616 620

## Description

### Cross Reference to Related Applications

This non-provisional patent application claims priority to U.S. Provisional Application Serial Number 62/564,492, Entitled "HIGH CAPACITY APPARATUS FOR LAYERED MANUFACTURING FROM POWDERED MATERIALS" by Jonas Van Vaerenbergh et al., filed on September 28, 2017.

### Field of the Invention

The present disclosure concerns an apparatus and method for the digital fabrication of three dimensional (3D) articles utilizing powder materials. More particularly, the present disclosure concerns a very compact and high capacity powder handling system.

### Background

Three dimensional (3D) printing systems are in rapidly increasing use for purposes such as prototyping and manufacturing. One type of three dimensional printer utilizes a layer-by-layer process to form a three dimensional article of manufacture from powdered materials. One challenge with this process is to design a system for fabricating large articles. This is particularly an issue when certain portions of a printing system must be operated in a vacuum or with a controlled atmosphere.

WO 2015/025171 describes an additive manufacturing machine for building objects by layerwise melting of powder material. The machine comprises a build chamber containing a build platform, a powder dispenser for depositing the powder material in layers across the build platform, a high energy beam for selectively melting powder material in each layer and a control device for controlling a property of the powder material given by build particles in the powder material that are below an upper particle size limit specified for the build.

US 2002/090410 describes a removing apparatus for removing unbonded powder material remaining around a three dimensional model which is a bonded structure of the powder material.

### Brief Description of the Figures

FIG. 1 is a isometric illustration of an exemplary three dimensional printing system. In this view a front door is removed to illustrate components within a lower vacuum chamber.
FIG. 2 is a front view of an exemplary three dimensional printing system. In this view a front door is removed to illustrate components within a lower vacuum chamber.
FIG. 3 is an isometric schematic illustration of modules for storing and transporting powder.
FIG. 4 is an isometric illustration of a build module atop a powder storage module with a front panel removed for illustrative purposes.
FIG. 5A is a side view of a vertical powder transport module.
FIG. 5B is a more detailed view of a lower end of the vertical powder transport module.
FIG. 5C is an image of a lower portion of a helical screw used for powder transport.
FIG. 6 is an isometric illustration of an upper portion of a build module along with a vertical transport module, a fixed hopper, and a translating powder coater.
FIG. 7A depicts an initial state of a three dimensional printing system with a full powder storage module prior to the beginning of a printing operation.
FIG. 7B depicts the beginning of the printing operation.
FIG. 7C depicts a later stage of the printing operation.
FIG. 7D depicts a completed printing operation.
FIG. 8 is an isometric schematic illustration of exemplary modules for storing and transporting powder, not in accordance with the claimed invention.

### Summary

In a first aspect of the disclosure a system according to claim 1 for fabricating a three dimensional article of manufacture in a layer-by-layer manner includes a build module, a powder storage module, a powder transport conduit, a powder tank, a vertical powder transport module, a fixed hopper (rail-mounted but fixed during operation), and a translating powder coater. The build module has a lateral side and includes a vertically displaceable build platform for receiving layers of powder during the fabrication of the three dimensional article of manufacture. The powder storage module is located at least partially below the build module. The powder storage module has a lateral side, defines an internal volume for holding powder, and includes a lower portion that receives powder from the internal volume. The powder transport conduit receives powder from the lower portion of the powder storage module and transports the powder to the powder tank. The vertical powder transport module is laterally offset from the lateral sides of the build module and the powder storage module and includes a lower end for receiving powder from the powder tank and an upper end having a laterally extending outlet. The fixed hopper is positioned above the build module. An upper portion of the hopper receives powder from the laterally extending outlet of the vertical powder transport module. The hopper extends downwardly to a dispensing end. The dispensing end of the hopper is positioned above the build module proximate to the lateral side. The powder coater moves laterally across the build module for depositing layers of powder upon the build platform, the powder coater receives powder by positioning under the dispensing end of the fixed hopper.

In one implementation the build module includes a central build chamber containing the vertically displaceable build platform and an overflow chamber portion between the build chamber and the lateral side of the build module. The powder coater parks or stops over the overflow chamber portion to receive powder from the dispensing end of the hopper.

### Detailed Description of the Preferred Embodiments

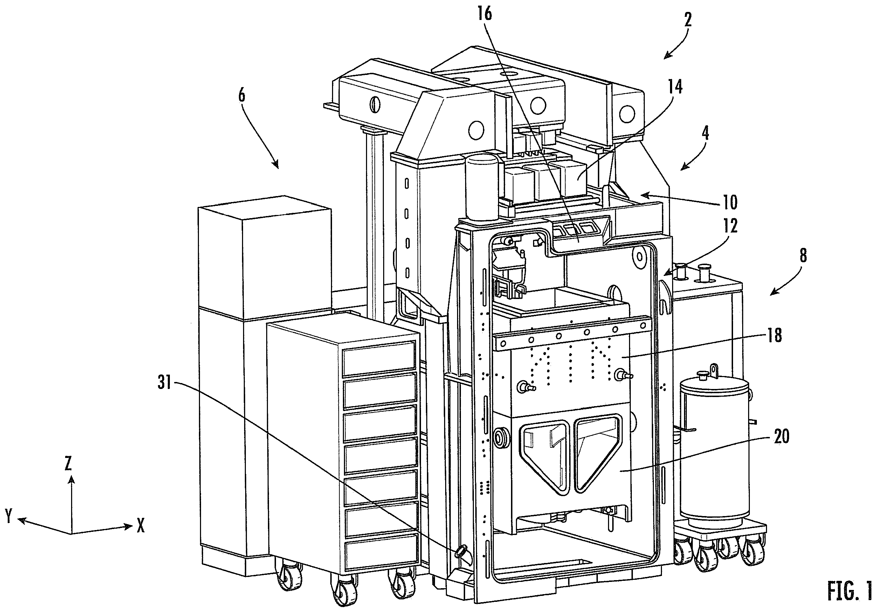

FIG. 1 is an isometric illustration of an exemplary three dimensional (3D) printing system 2 with some features missing for illustrative purposes. In describing three dimensional printing system 2, mutually orthogonal axes X, Y, and Z will be used. The axes X and Y will be referred to as "lateral" axes. The direction -X is left and +X is right. The direction +Y is toward the back and the direction -Y is toward the front. The axis Z will be referred to as a "vertical" axis with +Z being an upward direction and -Z being a downward direction.

The three dimensional printing system 2 has a main chassis 4 and peripheral components such as high powered laser engine 6 and gas handling system 8. High powered laser engine 6 includes one or more high powered lasers that can output laser optical power from hundreds of watts to more than 1000 watts for the purpose of the high speed melting of metal powder layers. The output from laser engine 6 is an optical signal that is carried by a fiber optical path into the main chassis 4. The gas handling system 8 is configured to evacuate a chamber within the main chassis 4 and to backfill it with a non-oxidizing or inert gas such as argon or nitrogen.

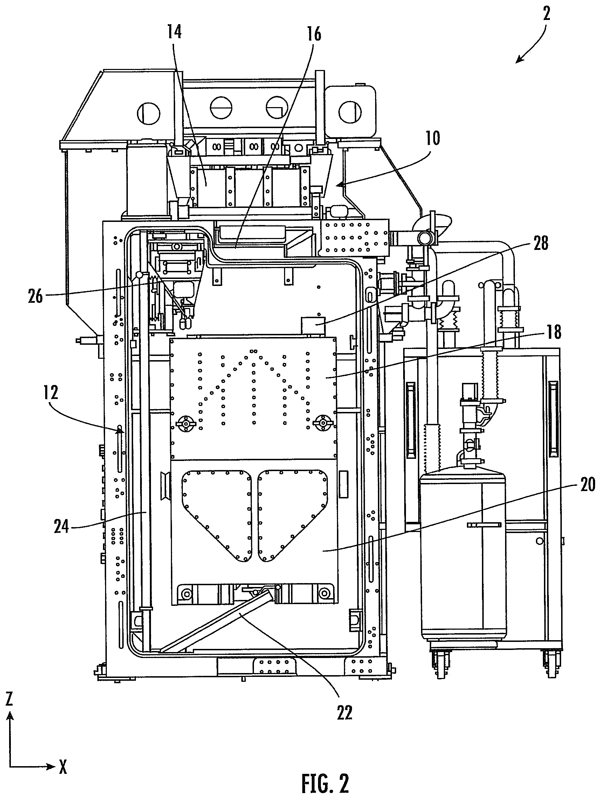

FIG. 2 is a front schematic view of the three dimensional printing system 2 with some features missing for illustrative purposes. The instant description refers to both FIGS. 1 and 2. The main chassis 4 is divided into two main sections including an upper optics section 10 and a lower vacuum chamber section 12. The upper optics section 10 includes scanner components 14 which include the endpoints of fiber optics carrying power from laser engine 6 and scanning optics. Separating upper optics section 10 from the lower vacuum chamber section 12 are transparent windows 16. Transparent windows 16 allow optical power to pass from scanner components 14 to the lower vacuum chamber 12. The transparent windows 16 protect the scanner components 14 from vapors generated in lower vacuum chamber 12 as metal powder is melted.

The upper optics section 10 is configured for calibration and servicing of the scanner components 14. The upper optics section 10 is configured to shuttle all or portions of scanner components 14 in a backward (+Y) direction so that they can be calibrated. The upper optics section 10 is also configured to shuttle the transparent windows 16 in a forward (-Y) direction so that they can be cleaned.

The lower vacuum chamber 12 contains modules for transporting powder and for storing and handling powder to be processed by the scanner components 14. The lower vacuum chamber 12 includes a build module 18, a storage module 20, a powder transport conduit 22, a vertical powder transport module 24, a fixed hopper (rail mounted for ease of removal and replacement but fixed during operation) 26, and a translating powder coater 28. The combination of the fixed hopper 26 and the translating powder coater 28 can be referred to as a powder layering apparatus (26 and 28).

The main chassis 4 can also include a port 31 for coupling an external source of metal powder to one or more of the modules for transporting and storing powder within the lower vacuum chamber 12. In some embodiments port 31 can be used to remove powder from the lower vacuum chamber 12 or to add additional powder to the powder transporting systems or storage module 20.

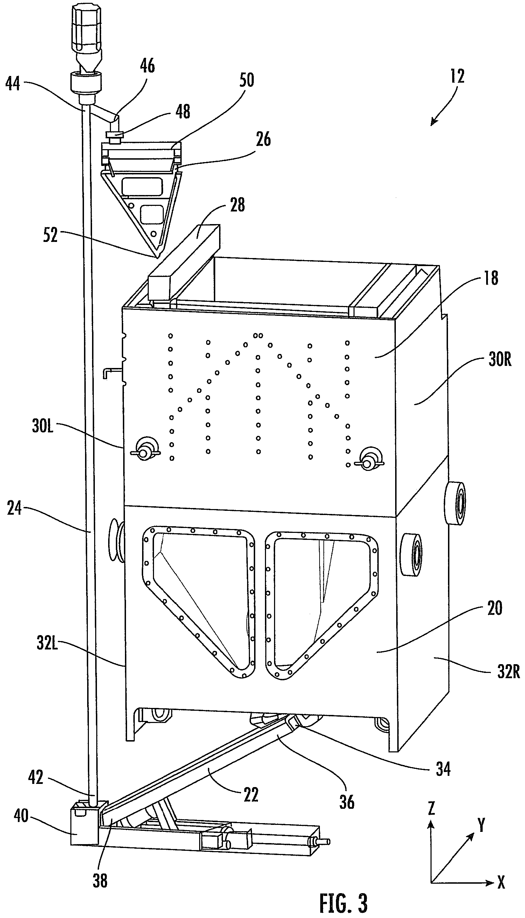

FIG. 3 depicts the modules for storing and transporting powder in more detail. The build module 18 includes lateral sides 30 including a left lateral side 30L and a right lateral side 30R. The storage module 20 includes lateral sides 32 including a left lateral side 32L and a right lateral side 32R. In the illustrated embodiment, the left lateral sides 30L and 32L are substantially coplanar and the right lateral sides 30R and 32R are substantially coplanar. Storage module 20 is at least partially below the build module 18 and, in the illustrated embodiment, modules 18 and 20 form an integral unit with common lateral sides 30 and 32.

At a lower end of the storage module 20 is a powder outlet 34 at which an inlet end 36 of the powder transport conduit 22 is positioned. In one embodiment the outlet 34 can include a valve. In the illustrative embodiment the powder transport conduit 22 is a vibratory chute 22 that slopes downwardly and laterally from inlet end 36 to an outlet end 38. The outlet end is coupled to a small powder tank 40 which is positioned at a lateral location. Rising upwardly from the powder tank 40 is the vertical powder transport module 24. The vertical powder transport module 24 is parallel to and in close proximity to but spaced apart from the left lateral sides 30L and 32L of the build module 18 and powder storage module 20 respectively. The vertical powder transport module 24 extends upwardly from a lower end 42 that is coupled to the powder tank 40 and to an upper end 44 that is above the fixed hopper 26. Extending laterally and downwardly from the upper end 44 is a laterally extending outlet 46 that is positioned to transfer powder down into an inlet 48 of the fixed hopper 26. The fixed hopper has an upper end 50 with inlet 48 and a lower dispensing end 52. The lower dispensing end 52 is positioned over a portion of the build module 18 that is proximate to the left lateral side 30L.

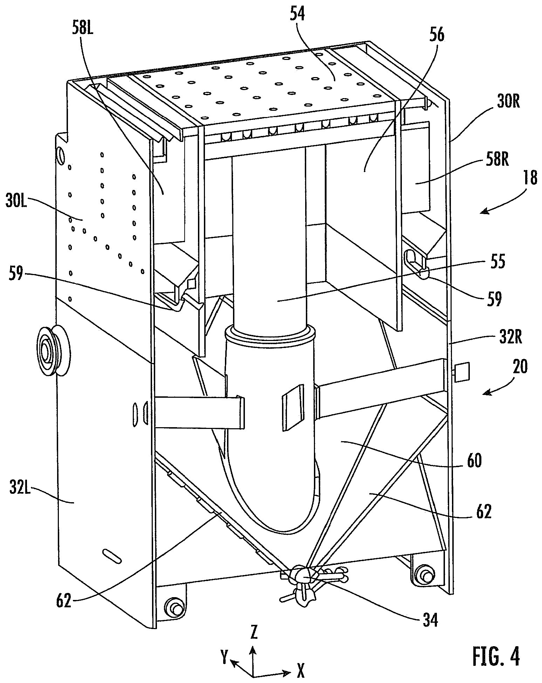

FIG. 4 is an isometric drawing depicting the build module 18 and powder storage module 20 in greater detail with a front panel removed. Build module 18 includes a vertically displaceable build platform 54 upon which layers of powder are to be dispensed and selectively melted. Build platform 54 is raised and lowered by a central piston 55. Displaceable build platform 54 moves vertically within a central build chamber 56. On the left and right lateral sides of central build chamber 56 are two overflow chamber portions 58L and 58R. Left overflow chamber portion 58L is between the left lateral side 30L and the central build chamber 56. Right overflow chamber portion 58R is between the central build chamber 56 and the right lateral side 30R. In one embodiment the overflow chamber 58 is one continuous chamber on all four sides of the central build chamber 56.

At least partially below (or directly below) the build module 18 is the powder storage module 20. Powder storage module 20 defines an internal chamber volume 60 for storing powder. The powder storage module 20 includes sloped surfaces 62 that slope downwardly and inwardly toward the powder outlet 34. The sloped surfaces 62 define at least a portion of the internal chamber volume 62 that tapers downwardly to the powder outlet 34. Each of the overflow chambers 58 has a valve 59 that allows powder in each overflow chamber 58 to be released into the internal chamber volume 62 as desired.

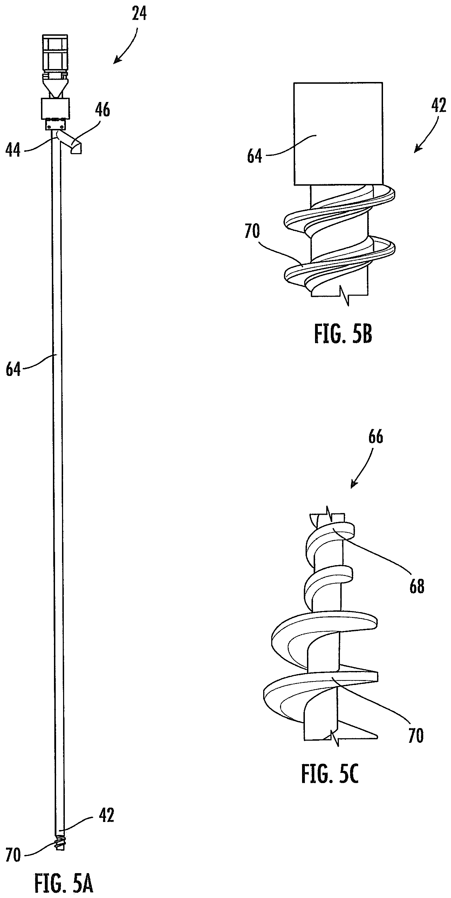

FIGS. 5A-C are various views of the vertical powder transport module 24. FIG. 5A is a side view of the entire vertical powder transport module 24 in isolation. FIG. 5B is a more detailed view of the lower end 42 of the vertical powder transport module 24. The vertical powder transport module 24 includes a outer vertical tube 64 with a helical screw 66. FIG. 5C illustrates a lower portion of the helical screw 66. The helical screw 66 includes a long internal portion 68 that extends through the vertical tube 64 and an external portion 70 that extends beyond the vertical tube 64. The long internal portion 68 has an outer diameter that is less than an inner diameter of the vertical tube 64. There is a clearance between the long internal portion 68 outer diameter and the inner diameter of the vertical tube 64 to minimize crushing and grinding of powder during vertical transport of the powder up through the vertical powder transport module 24. In the exemplary embodiment, the external portion 70 has an outer diameter that is greater than the outer diameter of the long internal portion 68 to improve efficiency of moving powder up into the vertical tube 64.

In operation, the external portion 70 of helical screw 66 extends down into the powder tank 40. A motor rotates the helical screw 66 which in turn functions as an "Archimedes Screw" to transport powder from the powder tank 40 and up to the laterally extending outlet 46.

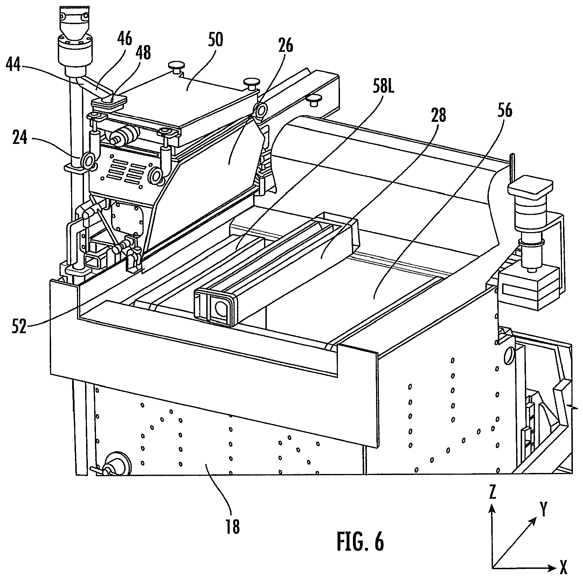

FIG. 6 depicts an upper portion of the build module 18, an upper portion of the vertical powder transport module 24, the fixed hopper 26, and the translating powder coater 28. As shown, the hopper 26 has an upper end 50 with an inlet 48 for receiving powder from the laterally extending outlet 46 of the vertical powder transport module 24. The upper end 50 of the hopper 26 has a sieve through which the powder passes before being released by the lower dispensing end 52. The lower dispensing end 52 extends from front to back (along Y) over the left overflow chamber portion 58L.

The translating powder coater 28 extends front to back (along Y) along the full span of the central build chamber 56 and translates back and forth along X to deposit each layer of powder. The translating powder coater 28 parks over the left overflow chamber portion 58L so as to be under the lower dispensing end 52 of hopper 26 when it requires a recharge of more powder. The powder coater 28 is capable of depositing layers of powder when moving in either the right (+X) or left (-X) direction.

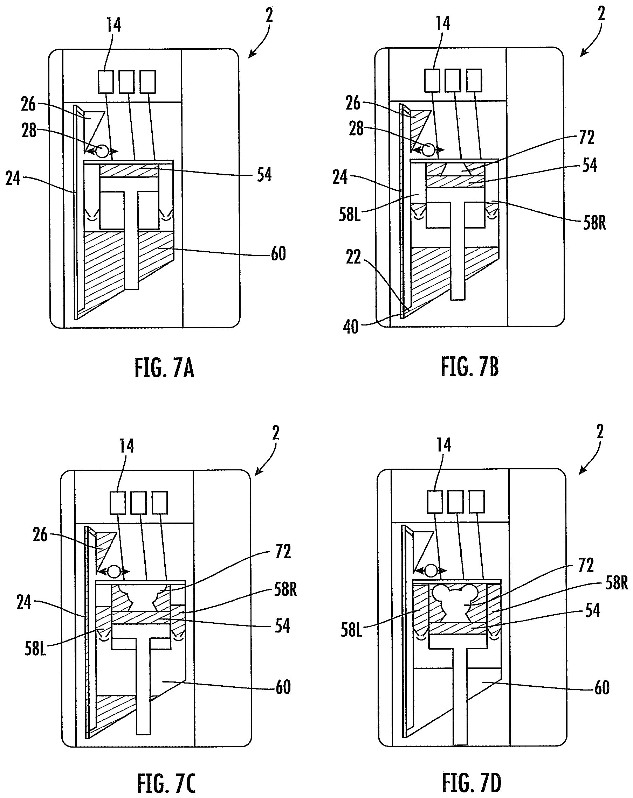

FIGS. 7A-D are highly schematic figures illustrating a sequence of operating the three dimensional printing system 2 to form a three dimensional article of manufacture 72. FIG. 7A depicts an initial state of the system 2 when the internal chamber volume 60 of the powder storage module 20 is initially full of metal powder.

FIG. 7B depicts the beginning of operation. Powder is transported out of the internal chamber volume 60, up the vertical powder transport module 24, and to the hopper 26. The hopper 26 has dispensed powder into the powder coater 28. Powder coater 28 has been dispensing layers of metal powder that are melted and fused by scanner components 14. In the process of dispensing layers of powder, the powder coater 28 levels each layer, with excess powder falling into the overflow chamber portions 58L and 58R.

FIG. 7C depicts continued operation and FIG. 7D depicts completed operation. In the depicted completion, the internal chamber volume 60 is completely or nearly empty, the overflow chamber portions 58L and 58R are nearly full, and the three dimensional article of manufacture 72 is fully formed.

Although FIGS. 7A-D are highly schematic, they are suggestive of a design alternative. In this alternative, a sloped surface 62 of the internal chamber volume 60 slopes down to an extension of the internal volume that provides a powder transport conduit 22 coupled to the a vertical powder transport module 24 at a lateral location which defines a powder tank 40.

The overall geometry of powder flow illustrated in this system 2 is (1) laterally from below the powder storage module 20 to a left lateral side, (2) vertically up along the left lateral sides (30L and 32L), (3) laterally and downwardly into the hopper 26, (4) downwardly into the powder coater 28, and then laterally from the powder coater 28 over the build platform 54. In an alternative embodiment, the powder flow could be to a right lateral side, vertically up along the right lateral side (30R and 32R), and to a fixed hopper that is above the right lateral side 30R of the build module 30. Then the powder coater 28 would receive powder from the hopper 26 while being parked over the right overflow chamber 58R.

In other embodiments, the powder coater 28 can move from front to back (+/- Y directions). For such an implementation, certain powder transport features such as the vertical powder transport module 24 and the lower dispensing end of the hopper 26 can be located at the back or front of the build chamber 56.

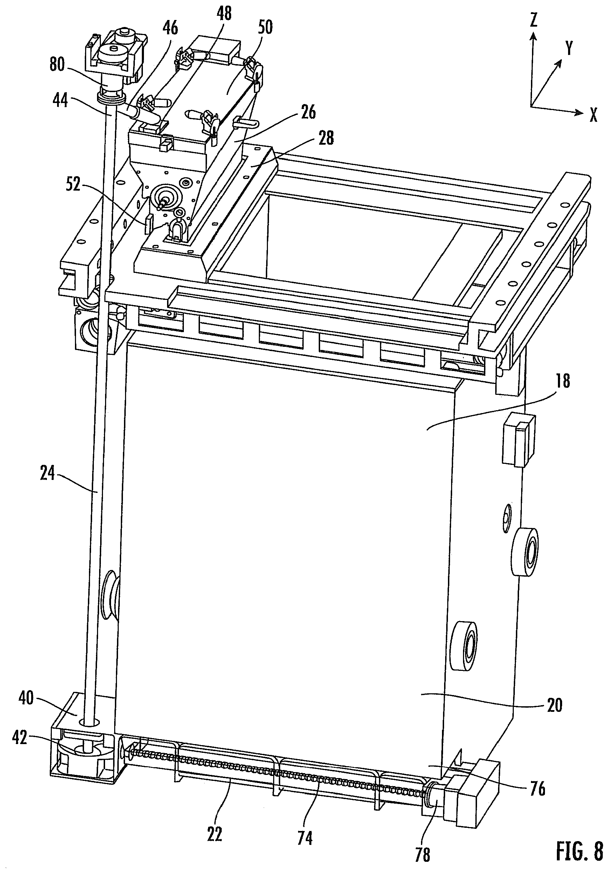

FIG. 8 is an isometric schematic illustration of an exemplary configuration of the modules for storing and transporting powder. The embodiment of FIG. 3 is an alternative to the configuration of FIG. 8. In comparing elements, like elements generally indicate like functions, but the specific implementations may be different. Improvements in the FIG. 8 configuration include a horizontal powder transport conduit 22 that spatially allows for a larger capacity storage module 20 for the same overall physical size of the lower vacuum chamber 12.

The powder transport unit 22 includes a motorized and rotating helical screw 74 that enables a horizontal transport of powder from a lower portion 76 of the storage module 20 to the powder tank 40. Helical screw 74 is similar to the helical screw 66. Thus, helical screw transportation moves powder from the lower portion 76 of the storage module 20 to the hopper 26. The helical screw transport is driven by motors 78 and 80 that rotate helical screws 74 and 66 respectively.

The specific embodiments and applications thereof described above are for illustrative purposes only and do not preclude modifications and variations as long as they are encompassed by the scope of the following claims.

## Claims

1. A system (2) for fabricating a three dimensional article of manufacture in a layer-by-layer manner comprising:
a build module (18) including a vertically displaceable build platform (54) for receiving layers of powder during the fabrication of the three dimensional article of manufacture, the build module (18) having a lateral side;
a powder storage module (20) located at least partially below the build module (18), the powder storage module (20) having a lateral side and defining an internal volume for holding powder and includes a powder outlet (34) that receives powder from the internal volume;
a powder tank (40);
a powder transport conduit (22) configured to receive powder from a lower end of the powder storage module (20) and to transport the powder to the powder tank (40);
a vertical powder transport module (24) that is laterally offset from the lateral sides of the build module (18) and the powder storage module (20) and including a lower end (42) for receiving powder from the powder tank (40) and an upper end (44) having a laterally extending outlet (46);
a fixed hopper (26) positioned above the build module (18), an upper portion of the hopper (26) receiving powder from the laterally extending outlet (46) of the vertical powder transport module (24), the hopper (26) extending downwardly to a dispensing end (52), the dispensing end (52) positioned above the build module (18) proximate to the lateral side; and
a powder coater (28) that moves laterally across the build module (18) for depositing layers of powder upon the build platform (54), the powder coater (28) receives powder by positioning under the dispensing end of the fixed hopper (26);
**characterized in that** the powder transport conduit (22) is a sloping vibrating chute that slopes downwardly and laterally from the powder outlet (34) to the powder tank (40); and wherein the system further comprises a vacuum chamber containing the build module (18), the storage module, sloping powder transport conduit (22), the vertical powder transport module (24), the fixed hopper (26), and the powder coater (28).

2. The system of claim 1 wherein the internal volume of the storage module tapers downwardly toward the powder outlet (34).

3. The system of claim 2 wherein the powder outlet (34) includes a powder outlet valve.

4. The system of claim 1 wherein the vertical powder transport module (24) is a vertical tube with an internal helical screw whereby rotation of the internal screw raises the powder up through the tube.

5. The system of claim 1 wherein the build module (18) includes a central build chamber containing the vertically displaceable build platform (54) and an overflow chamber between the build chamber and the lateral side of the build module (18).

6. The system of claim 5 wherein the powder coater (28) parks over the overflow chamber to receive powder from the dispensing end of the hopper (26).

## Patentansprüche

1. System (2) zur schichtweisen Herstellung eines dreidimensionalen Herstellungsgegenstands, mit:
einem Aufbaumodul (18) mit einer vertikal bewegbaren Aufbauplattform (54) zum Aufnehmen von Pulverschichten während der Herstellung des dreidimensionalen Herstellungsgegenstands, wobei das Aufbaumodul (18) eine laterale Seite aufweist;
einem Pulverspeichermodul (20), das zumindest teilweise unter dem Aufbaumodul (18) angeordnet ist, wobei das Pulverspeichermodul (20) eine laterale Seite aufweist und ein inneres Volumen zum Aufnehmen von Pulver bildet und einen Pulverauslass (34) aufweist, der Pulver aus dem inneren Volumen empfängt;
einem Pulvertank (40);
einer Pulvertransportleitung (22) dazu ausgebildet ist, Pulver von einem unteren Ende des Pulverspeichermodul (20) zu empfangen und das Pulver zu dem Pulvertank (40) zu transportieren;
einem vertikalen Pulvertransportmodul (24), das seitlich von den lateralen Seiten des Aufbaumoduls (18) und des Pulverspeichermoduls (20) versetzt ist und ein unteres Ende (42) zum Empfangen von Pulver aus dem Pulvertank (40) sowie ein oberes Ende (44) mit einem sich seitlich erstreckenden Auslass (46) aufweist;
einem feststehenden Trichter (26), der über dem Aufbaumodul (18) angeordnet ist, wobei ein oberer Bereich des Trichters (26) Pulver aus dem sich seitlich erstreckenden Auslass (46) des vertikalen Pulvertransportmoduls (24) empfängt, wobei der Trichter (26) sich nach unten zu einem Ausgabeende (52) erstreckt, wobei das Ausgabeende (52) über dem Aufbaumodul (18) nahe der lateralen Seite angeordnet ist; und
einem Pulverbeschichter (28), der sich seitwärts über das Aufbaumodul (18) bewegt, um Pulverschichten auf der Aufbauplattform (54) aufzubringen, wobei der Pulverbeschichter (28) Pulver durch Positionieren unter dem Ausgabeende des feststehenden Trichters (26) empfängt,
**dadurch gekennzeichnet,**
**dass** die Pulvertransportleitung (22) eine geneigte vibrierende Rutsche ist, die von dem Pulverauslass (34) zu dem Pulvertank (40) nach unten und seitlich geneigt ist; und wobei das System ferner eine Vakuumkammer aufweist, welche das Aufbaumodul (18), das Speichermodul, die geneigte Pulvertransportleitung (22), das vertikale Pulvertransportmodul (24), den feststehenden Trichter (26) und den Pulverbeschichter (28) enthält.

2. System nach Anspruch 1, bei welchem das innere Volumen des Speichermoduls sich nach unten in Richtung des Pulverauslasses (34) verjüngt.

3. System nach Anspruch 2, bei welchem der Pulverauslass (34) ein Pulverauslassventil aufweist.

4. System nach Anspruch 1, bei welchem das vertikale Pulvertransportmodul (24) ein vertikales Rohr mit einer inneren Schneckenschraube ist, wobei das Drehen der inneren Schraube das Pulver durch das Rohr nach oben bewegt.

5. System nach Anspruch 1, bei welchem das Aufbaumodul (18) eine zentrale Aufbaukammer, welche die vertikal bewegbare Aufbauplattform (54) enthält, und eine Überlaufkammer zwischen der Aufbaukammer und der lateralen Seite des Aufbaumoduls (18) aufweist.

6. System nach Anspruch 5, bei welchem der Pulverbeschichter (28) über der Überlaufkammer parkt, um Pulver aus dem Ausgabeende des Trichters (26) zu empfangen.

## Revendications

1. Système (2) de production d'un article de fabrication tridimensionnel couche par couche comprenant :
un module de construction (18) comportant une plate-forme de construction déplaçable verticalement (54) pour recevoir des couches de poudre pendant la production de l'article de fabrication tridimensionnel, le module de construction (18) ayant un côté latéral ;
un module de stockage de poudre (20) situé au moins partiellement en dessous du module de construction (18), le module de stockage de poudre (20) ayant un côté latéral et définissant un volume interne pour contenir la poudre et comporte une sortie de poudre (34) qui reçoit la poudre du volume interne ;
un réservoir de poudre (40) ;
un conduit de transport de poudre (22) configuré pour recevoir la poudre depuis une extrémité inférieure du module de stockage de poudre (20) et pour transporter la poudre vers le réservoir de poudre (40) ;
un module de transport de poudre vertical (24) qui est décalé latéralement par rapport aux côtés latéraux du module de construction (18) et du module de stockage de poudre (20) et comportant une extrémité inférieure (42) pour recevoir la poudre du réservoir de poudre (40) et une extrémité supérieure (44) ayant une sortie s'étendant latéralement (46) ;
une trémie fixe (26) positionnée au-dessus du module de construction (18), une partie supérieure de la trémie (26) recevant la poudre depuis la sortie s'étendant latéralement (46) du module de transport de poudre vertical (24), la trémie (26) s'étendant vers le bas jusqu'à une extrémité de distribution (52), l'extrémité de distribution (52) étant positionnée au-dessus du module de construction (18) à proximité du côté latéral ; et
un dispositif de revêtement de poudre (28) qui se déplace latéralement à travers le module de construction (18) pour déposer des couches de poudre sur la plate-forme de construction (54), le dispositif de revêtement de poudre (28) reçoit de la poudre en se positionnant sous l'extrémité de distribution de la trémie fixe (26) ;
**caractérisé en ce que** le conduit de transport de poudre (22) est une goulotte vibrante inclinée qui est inclinée vers le bas et latéralement de la sortie de poudre (34) au réservoir de poudre (40) ; et dans lequel le système comprend en outre une chambre à vide contenant le module de construction (18), le module de stockage, le conduit de transport de poudre incliné (22), le module de transport de poudre vertical (24), la trémie fixe (26) et le dispositif de revêtement de poudre (28).

2. Système selon la revendication 1, dans lequel le volume interne du module de stockage se rétrécit vers le bas en direction de la sortie de poudre (34).

3. Système selon la revendication 2, dans lequel la sortie de poudre (34) comporte une soupape de sortie de poudre.

4. Système selon la revendication 1, dans lequel le module de transport de poudre vertical (24) est un tube vertical comprenant une vis hélicoïdale interne, grâce à quoi la rotation de la vis interne soulève la poudre à travers le tube.

5. Système selon la revendication 1, dans lequel le module de construction (18) comprend une chambre de construction centrale contenant la plate-forme de construction déplaçable verticalement (54) et une chambre de débordement entre la chambre de construction et le côté latéral du module de construction (18).

6. Système selon la revendication 5, dans lequel le dispositif de revêtement de poudre (28) se place sur la chambre de débordement pour recevoir la poudre provenant de l'extrémité de distribution de la trémie (26).
